# EUROPEAN PATENT SPECIFICATION

(11) **EP 4 404 229 B1**
(45) Date of publication and mention of the grant of the patent: **26.03.2025**
(21) Application number: 22800721.7
(22) Date of filing: 14.09.2022
(51) Int. Cl.: H01H 9/10, H01H 33/66, H02B 1/21

(54) **AUTOMATED THREE-POLE BASE WITH SWITCHING AND PROTECTION DEVICE FOR LOW-VOLTAGE SWITCHBOARD AND LOW-VOLTAGE SWITCHBOARD INCORPORATING SAID AUTOMATED THREE-POLE BASE**
AUTOMATISIERTE DREIPOLIGE BASIS MIT SCHALT- UND SCHUTZVORRICHTUNG FÜR NIEDERSPANNUNGSSCHALTFELD UND NIEDERSPANNUNGSSCHALTFELD MIT DER AUTOMATISIERTEN DREIPOLIGEN BASIS
BASE TRIPOLAIRE AUTOMATISÉE COMPORTANT UN DISPOSITIF DE MANOEUVRE ET DE PROTECTION POUR TABLEAU BASSE TENSION ET TABLEAU BASSE TENSION CONTENANT LADITE BASE TRIPOLAIRE AUTOMATISÉE

(30) Priority: 14.09.2021 ES 202131819 U
(43) Date of publication of application: 24.07.2024
(73) Proprietor: Ormazabal Y Cia S.L.U., 48140 Igorre (Bizkaia) (ES)
(72) Inventor: CASADO CARTON, Juan María, 48140 Igorre (Vizcaya) (ES); CORMENZANA LOPEZ, Javier, 48140 Igorre (Vizcaya) (ES); ZAUTUA BILBAO, Igor, 48140 Igorre (Vizcaya) (ES); SANCHEZ RUIZ, Juan Antonio, 48140 Igorre (Vizcaya) (ES)
(74) Representative: Herrero & Asociados, S.L.
(86) International application number: PCT/ES2022/070580
(87) International publication number: WO 2023/041828

(56) References cited:
- EP-A1- 0 670 581
- EP-A1- 3 195 338
- EP-A1- 3 706 264
- EP-A1- 3 889 984
- EP-B1- 3 195 338
- WO-A1-2005/020259
- CN-A- 113 168 981
- ES-U- 1 243 729

## Description

### OBJECT OF THE INVENTION

The present invention relates to an automated three-pole base with at least one switching and protection device that is installed in low-voltage switchboards, wherein said switchboards are responsible for, once the energy has been transformed to the low-voltage range, distributing electricity to the different consumers.

The automated three-pole base with at least one switching and protection device of the invention can replace the known fuse-holder base used as a means of protection in low-voltage switchboards. The switching and protection device includes both the protection function and that of isolating the low-voltage switchboard from the part of the low-voltage grid that is downstream the switching and protection device, as well as the grounding function of said low-voltage grid that is downstream the switching and protection device.

### BACKGROUND OF THE INVENTION

Basically, a low-voltage switchboard comprises a metallic or insulating enclosure inside which the different electrical components are installed, such as the set of connection bars for the switchboard, the distribution busbar, the fuse-holder bases, the switching means that includes the function of isolating the low voltage switchboard from the power supply (part of the grid that is upstream of the low voltage switchboard) and/or the grounding function of the set of distribution bars, as well as the output of auxiliary circuits and metering.

The set of connection bars has the function of electrically connecting the conductors coming from the medium voltage/low voltage transformer with the distribution busbar, the latter's function being to pass the energy coming from the set of connection bars to the different fuse-holder bases.

The fuse-holder base has the function of protecting the electrical line that hangs from it from overloads and short-circuit currents, that is, its main function is to open the circuit when there is an electrical fault either due to overload or short-circuit. Therefore, due to an electrical fault as a result of overload or short circuit, the fuse blows and the circuit remains open, leaving the line hanging from said fuse-holder base without voltage. However, although the fuse is an effective means of protection against overloads and short circuits, this means of protection has the inconvenience related to the time required to replenish the voltage on the line affected by the fault, which implies the need to send a qualified operator to the installation where the low voltage switchboard is located and replace the blown fuse or fuses.

Tasks for maintenance, repair, replacement or extension of the low voltage switchboard are carried out by first interrupting, for safety reasons, the operation of the entire switchboard itself, that is, leaving said low voltage switchboard out of operation, since it is necessary to access parts of the switchboard that in operation are under voltage, such as the busbar set in an extension operation, to make the interconnection between said busbar set and the bars of the extension switchboard. To leave the low voltage switchboard out of operation, it is necessary to carry out several operations on the installation where said low voltage switchboard is located. Usually, when there is only one low-voltage switchboard in the installation, the medium-voltage/low-voltage transformer must first be disconnected, then disconnecting upstream the switchboard and downstream it must be carried out, leaving thus the switchboard without power, and then the busbar set must be grounded.

In addition, low voltage switchboards include an auxiliary or relief connection, which allows the connection of an external auxiliary power source, such as a generator set, commonly used when there is a deficit in the generation of electrical energy somewhere or when an outage occurs in the electricity supply, and thus be able to supply electricity to consumers. In some low voltage switchboards, the auxiliary connection is integrated into the switchboard enclosure itself and in other cases it is integrated into the switching means that includes the function of isolating the low voltage switchboard from the power supply.

Thus, sometimes it is necessary to connect the external auxiliary power supply to the low voltage switchboard, for example, due to a deficit in the power supply, a load transfer, the need to replace the medium voltage/ low voltage transformer or the need to carry out maintenance or repair work on the installations where the low voltage switchboard is located. On these occasions, said connection is made with the switchboard out of operation, that is, the low voltage switchboard is left out of operation before connecting the external auxiliary power supply, therefore, a means capable of isolating the low voltage switchboard from the supply grid is necessary.

In relation to the function of isolating the low voltage switchboard from the power supply (part of the grid that is upstream the low voltage switchboard) and/or the grounding function of the distribution busbar, it is carried out by means of a disconnection base that is installed at the head of the low voltage switchboard as an additional element to the fuse-holder bases. The disconnection base can be assembled by one-pole modules, so that the disconnection base can be two-pole, three-pole or fourth-pole. Each one-pole module is generally composed of a casing that partially houses one or more input strips and one or more output strips that, through their free ends, are respectively connected to the power supply and to the distribution busbars of the low voltage switchboard. Coupling or decoupling means are also housed inside the casing, usually metal blades, which are coupled (closed disconnector) or decoupled (open disconnector) with respect to the other end (inside the casing) of the input and output strips to isolate (open disconnector) or connect (closed disconnector) the low voltage switchboard from the power supply.

As an example of the state of the art, patent ES2277729B1 can be cited. This disconnection base refers to a vertical four-pole base with top or bottom connection, and forms an interchangeable unit for assembly in low voltage switchboards. Specifically, this disconnection base incorporates an insulating casing inside which a vertical four-pole disconnector is housed, the input strips of which are made up of conductive bars that extend until they protrude from the top or bottom of the casing for connection to the power supply of the low voltage switchboard.

However, in said state of the art, the disconnection base that is installed at the head of the low voltage switchboard can only isolate the low voltage switchboard from the power supply, that is, from the part of the grid that it is upstream the low-voltage switchboard, but not from the low-voltage grid that is downstream the low-voltage switchboard. Likewise, there are no specific means for grounding the low-voltage grid downstream the low-voltage switchboard, so when carrying out tasks of maintenance, repair, replacement, etc., on the low-voltage switchboard or on the output lines of the low-voltage switchboard, there is a risk that there may be a possible voltage return from downstream the low-voltage switchboard, which means carrying out the work in an unsafe manner with risk of electrocution for operators. In this sense, document ES1243729U can also be cited, which lacks the isolation and grounding functions of the low-voltage grid that is downstream the low-voltage switchboard.

There are, however, examples of the state of the art that include the possibility of isolating the low voltage switchboard from the low-voltage grid that is downstream the low voltage switchboard, such as those described in patent applications ES2763627A1 and WO2020109640A1. For this purpose, in both examples a three-position vacuum circuit breaker is used, that is, it includes the functions of making, breaking and/or disconnecting and grounding. Likewise, in both examples it is necessary to use a selector means with at least two positions, which allows selecting a first position or a second position, this selector means being associated with an actuating means comprising an actuator provided with a first functional position and a second functional position. In this way, starting from the two-position actuation means through the selector means, the three switching positions or functions (making, breaking and/or disconnecting and grounding) of the vacuum circuit breaker are achieved. These examples have the drawback that it is necessary to use vacuum circuit breaker with higher performance, higher cost and larger dimensions, due to their three switching positions, as well as the need to use a selector means to be able to obtain by means of a single two-position operating means the three switching positions of the vacuum circuit breaker, which means that the switching and protection means has larger dimensions and consequently it is more complicated to replace in current low voltage switchboards the well-known fuse-holder base without having to modify any part of the low voltage switchboard. This problem of dimensions is aggravated in the solution described in patent application WO2020109640A1 due to the fact that a protection element is also included, such as a fuse, as backup protection against short circuits or high-level electrical faults. On the other hand, a problem with the known vacuum circuit breakers is that the separation between the moving and fixed contacts in an open circuit situation (in the disconnection switching position) is not acceptable, since it does not ensure the disconnecting function because the dielectric medium where they act is the vacuum of the bottle.

In addition, in general, for low voltage switchboards to have a degree of protection against accidental contacts with live parts and to be safe for operators, it is necessary to apply additional measures, such as the placement of intermediate barriers, doors with locks, mechanical and electrical interlocks, status indicator means, etc., to avoid direct access to the supply and distribution busbars, the disconnector, the input strips, to avoid carrying out incorrect switching sequences, etc.

Finally, fuse-protected low-voltage switchboard is a known solution, whose reliability has been proven over many years. However, the implementation of smart grids requires smart low-voltage switchboard that allows the automation of the low-voltage grid, ensuring the safety of people and equipment and increasing the quality of customer service through the monitoring, protection and automation of the low-voltage grid, maintaining the coordination of protections and reliability, without increasing the need for maintenance.

### DESCRIPTION OF THE INVENTION

The automated three-pole base with at least one switching and protection device according to claim 1 object of the invention intends to solve any and all the aforementioned problems. Said automated three-pole base with at least one switching and protection device is applicable to low-voltage switchboards that comprise, at least, a set of connection busbars, a distribution busbar, an auxiliary connection, outputs of auxiliary circuit and metering, etc.

The switching and protection device includes the function of protection against electrical faults resulting from overloads and short circuits, as well as the function of isolating the low voltage switchboard from the low-voltage grid that is downstream the switching and protection device and/or the function of grounding said low-voltage grid that is downstream the switching and protection device. In this way, by means of a single element, that is, by means of the switching and protection device, it is possible to perform several functions instead of using one element to perform each one of the functions, thus obtaining a more compact low voltage switchboard and avoiding problems of space for its installation.

In this sense, the switching and protection device comprises at least one switch with at least two positions (connection and disconnection), equipped with a fixed contact and a moving contact. This switch can be a two-position vacuum circuit breaker that can be operated locally and/or remotely, manually (for example, by a button) or in a motorized way (for example, by means of a closing and opening coil), and having the capacity to break electrical currents due to overloads and short circuits, as well as to open nominal or load currents, as established in the IEC 60947-2:2006 standard in its PART 2: CIRCUIT BREAKERS. Also, this vacuum circuit breaker includes fast reclosing capacity (no need to wait a time between different breaking operations, that is, there is no thermal effect as for example in magneto-thermal switches), it can be manual or automatic reclosing, for the elimination of transient faults, which will be programmed depending on the time and type of fault, and carried out from a control unit of the installation. The switching and protection device also comprises at least one first actuation means of the vacuum circuit breaker, such as a mechanical actuator, so that it activates the vacuum circuit breaker to cause said switch to pass from a closed status to an open status and vice versa, thus fulfilling the protection functions, breaking electrical currents due to overloads and short circuits, as well as nominal or load currents, without the need for an auxiliary power supply. The switching and protection device also comprises:
- at least one protection element against overloads and short-circuit currents, such as a fuse, electrically connected in series with the vacuum circuit breaker, and
- at least one disconnector with at least two switching positions, capable of isolating (open disconnector) or connecting (closed disconnector) the low-voltage switchboard from the part of the low-voltage grid downstream the switching and protection device, this disconnector being electrically connected in series with the vacuum circuit breaker and the protection element.

The circuit breaker of the switching and protection device object of the invention, such as a vacuum circuit breaker, can replace the fuses used in the state of the art and therefore the need to replace blown fuses is avoided every time there is an electrical fault due to an overload or short circuit. In addition, due to the possibility that the switching and protection device of the invention can be operated remotely, the need to send a qualified operator to the installation where the low voltage switchboard is located to restore operation after clearing an electrical fault is avoided. However, in order to maintain the same reliability and coordination between the high voltage protections and low voltage protections of the current electrical grid, a backup protection is maintained by means of the protection element (such as a fuse) in series with the circuit breaker. In this case, the protection element will act (if it is a fuse, it will blow) when the short-circuit level is high enough so as not to allow rapid automatic reclosing, since in the event of high electrical fault levels it is recommended to inspect the installation on site for security reasons. In this way, the switch is a vacuum circuit breaker with lower performance, capable of breaking currents up to a certain level and allowing the protection element to break greater currents.

The possibility of the switching and protection device including an anti-pumping interlock has been considered, so that, if the opening signal and the closing signal of the vacuum circuit breaker are present at the same time, opening prevails, closing being blocked until operation orders disappear.

The disconnector comprises linearly sliding contacts, the switching and protection device being able to comprise a second actuation means that acts on the disconnector contacts to cause said disconnector to pass from a closed status to an open status and vice versa. The second actuation means can comprise a rack mechanism, provided, for example, with at least one pinion and a toothed bar, such that a rotation applied to the pinion causes the linear displacement of the toothed bar and, in turn, the linear displacement of the moving contact with respect to of the fixed contact of the disconnector. The actuation of the second actuation means can be generated, for example, by means of an opening/closing lever, manually or in a motorized way.

The disconnector can also include a grounding means, so that once the opening switching position of the disconnector is obtained, the part that remains downstream the switching and protection device, specifically the part that remains downstream the disconnector, can be grounded against a possible voltage return from downstream to the low voltage switchboard, thus guaranteeing the safety of operators while they carry out maintenance, repair or replacement tasks on said part downstream the switching and protection device. The disconnector can also include a point to be able to safely verify the presence of voltage and to be able to connect to protective ground the downstream connection, such as for maintenance tasks under safe conditions, such as checking the trigger chain and protection of the circuit breaker without affecting the connected / disconnected lines.

The switching and protection device comprises a casing that can incorporate inside the two-position vacuum circuit breaker, the first actuation means, the disconnector and the second actuation means, being able to leave the protection element mounted on the outside of the casing in a hole provided for this purpose, so that the protection element can be accessible from the outside of the casing and easily replaceable in operation (without the need to leave the low voltage switchboard out of operation). In this way, a compact switching and protection device is available, which includes several functions instead of using an element to perform each of the functions.

The casing comprises at least one handle for insertion (manual or automated) of the switching and protection device in a three-pole enclosure or for removal (manual or automated) of said device from a three-pole enclosure, said three-pole enclosure being able to include up to three switching and protection devices, one for each phase. In turn, this three-pole enclosure can be mounted on a support or plinth (which allows connecting a low-voltage switchboard distribution busbar with bypass conductors of the switchboard output), thus obtaining an automated three-pole base equipped with three switching and protection devices, one for each phase. It is a one-pole switching and protection device, which can act or can be operated independently of the rest of the switching and protection devices that comprise an automated three-pole base, the rest of the switching and protection devices continuing with their normal operation, maintaining the power supply of the rest of the unaffected lines, in order to affect the end customers as little as possible in case of need for operation or protection of any of the output power lines of the low voltage switchboard.

In line with the above, the three-pole fuse-holder bases of the state of the art of a low-voltage switchboard installed in the field and in operation can be totally or partially replaced by automated three-pole bases with switching and protection devices such as the one of the present invention, allowing the coexistence of both protection systems in the same low voltage switchboard in operation. This re-fitting of the bases is possible because the new automated three-pole base with at least one switching and protection device has such dimensions and technical features that it can be installed in the same hole as a fuse-holder base without having to modify any part of the low voltage switchboard.

Likewise, by means of the switching and protection device of the invention and the disconnection base (44) that is installed at the head of the low voltage switchboard, the low voltage switchboard can be left out of operation in an easy, fast and safe way for cases where maintenance, repair, replacement or extension of the low-voltage switchboard needs to be carried out, or when it is necessary to connect an external auxiliary power supply due to a deficit in power supply, a transfer of load, the need to replace the medium voltage / low voltage transformer or the need to carry out maintenance or repair work on the installations where the low voltage switchboard is located or in the lines downstream the low voltage switchboard.

The switching and protection device can also be safely removed from the three-pole enclosure for maintenance, verification and/or replacement of the protection element, such as a fuse, as well as replacement of the circuit breaker. The switching and protection device can be removed from the three-pole enclosure with the low voltage switchboard in operation, without interfering with the operation of the rest of the lines or three-pole bases, maintaining safety and the degree of protection.

On the other hand, the switching and protection device comprises at least one input terminal and one output terminal at least partially incorporated in the casing, said terminals being able to be electrically connected at one of their ends to a distribution busbar of the low voltage switchboard and with some bypass conductors (of the lines downstream the switching and protection device) externally to the casing, and said terminals may be electrically connected at the other end with the protection element and the disconnector. The electrical connection between the input terminal and the distribution busbar and the electrical connection between the output terminal and the bypass conductors can be plug-in, screw-in or any other type.

In order to guarantee the protection of the operators when carrying out operations prior to maintenance, repair or replacement of elements in the low voltage switchboard or in order to avoid unwanted operations, the switching and protection device of the invention comprises some mechanical and electrical interlocks, these interlocks being the following:
- a first interlock that only allows the removal of the switching and protection device from the three-pole enclosure when the circuit breaker is in the opening switching position or that only allows the opening of the disconnector when the circuit breaker is in the opening switching position.
- a second interlock to interlock, for example by padlocking, the manual operation by button of the circuit breaker.
- a third interlock that allows the switching and protection device to be grounded only when the disconnector is in its opening switching position.
- a fourth interlock to interlock, for example by padlocking, the manual loading of the first actuation means springs for the operation of the circuit breaker.

Various signals allow the status of the switching and protection device to be viewed, as well as the elements it comprises, comprising indicator means for this purpose, which, for example, may be the following:
- a first visual indicator means for the open or closed switching position of the circuit breaker.
- a second visual indicator means for open or closed switching position of the disconnector.
- a third visual indicator means for the state of the protection element.
- a fourth visual indicator means for the status of the first actuation means, such as indication of loaded springs of the mechanical actuator.

The switching and protection device also comprises at least one interface that allows connecting the control, operation and status sensors of each of the elements of the switching and protection device with an electronic protection relay for supervision, control and protection functions that can be installed on the same automated three-pole base where the switching and protection device is installed. The interface could also be directly connected to an installation control unit or low voltage switchboard instead of being connected to the protection relay.

Each protection relay of each automated three-pole base acquires different types of information for supervision purposes: instantaneous values of voltage, current and power (active/reactive) in each phase; real-time data, average values obtained during a defined period; voltage, current and energy profiles; voltage and current oscillography records for each phase during specific events; etc. Furthermore, as the low voltage switchboard is prepared with several temperature sensors for each phase, the protection relay reads this information and helps identify hot spots for preventive maintenance and for preventing possible faults in advance. All this information is transmitted by the protection relay to the control unit, such as via Ethernet, in order to store the information or send it to a remote client management and/or protection system. This information is of great help to monitor and control the low-voltage grid. The protection relay can also know the status of the different elements (such as the circuit breaker and the disconnector) and even remotely send/receive open/close/reclose commands for each of the phases (or for each switching and protection device individually) of each automated three-pole base or power line.

Likewise, the protection relay includes the possibility of configuration and/or selection of standard or customized curves for protection against overloads and short-circuits. Finally, another object of the invention is a low-voltage switchboard that incorporates at least one automated three-pole base with at least one switching and protection device as described above, wherein the low-voltage switchboard also comprises at least one set of connection bars, a distribution busbar, at least one measurement means, at least one auxiliary connection and at least one output of auxiliary circuits, as well as at least one support on which the measurement means is installed, a three-pole enclosure equipped with at least one switching and protection device and the electronic protection relay. In this way, the automated three-pole base comprises the support, the measurement means, the three-pole enclosure with switching and protection devices and the electronic protection relay. The support includes anchors for the mechanical fixing of the three-pole enclosure equipped with at least one switching and protection device. The three-pole enclosure includes a mechanical protection that prevents contact with live parts under voltage (such as the distribution busbar or the bypass conductors) once the switching and protection device has been removed from said three-pole enclosure, thus providing protection to people against access to dangerous parts and protection of the material against the harmful effects of mechanical impacts.

### DESCRIPTION OF THE FIGURES

Figure 1.- Shows a schematic diagram of the installation of a low voltage switchboard, showing at least one automated three-pole base equipped with at least one switching and protection device and one protection relay, as well as the low voltage switchboard control unit.
Figure 2.- Shows a sectional view of the switching and protection device of the present invention.
Figure 3.- Shows a first perspective view of the switching and protection device of the present invention, wherein part of the casing has not been represented for a better visualization.
Figure 4.- Shows a second perspective view of the switching and protection device with its casing.
Figure 5.- Shows a third perspective view of a part of the switching and protection device wherein the interface and the input and output terminals are shown.
Figure 6a.- Shows a perspective view of the automated three-pole base.
Figure 6b.- Shows an exploded view of the automated three-pole base, showing the relationship or assembly order of the set of elements that make up the automated three-pole base.
Figure 7.- Shows a front view of the switching and protection device, wherein the mechanical and electrical interlocks are shown, as well as the signs that allow viewing the status of the switching and protection device.
Figure 8.- Shows a perspective view of the low voltage switchboard with at least one automated three-pole base equipped with switching and protection devices, as well as at least one state-of-the-art three-pole fuse-holder base.

### PREFERRED EMBODIMENT OF THE INVENTION

A preferred embodiment is described below with reference to the figures cited above, without limiting or reducing the scope of protection of the present invention.

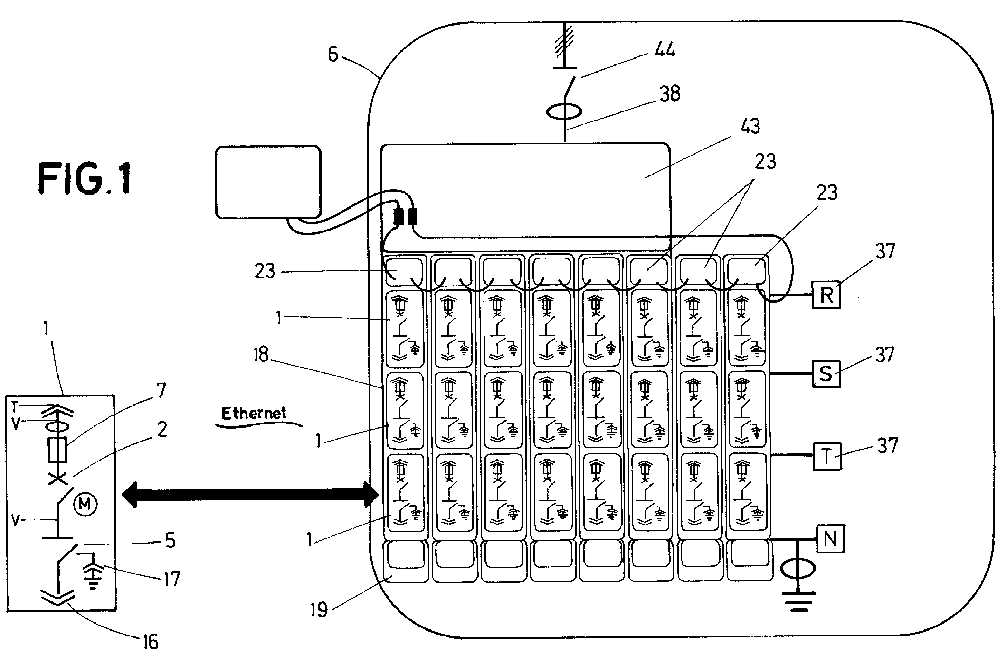

The automated three-pole base (18) with at least one switching and protection device (1) of figures 1 to 8 corresponds to an embodiment of the invention, wherein said switching and protection device (1) comprises at least one circuit breaker (2) with two positions, connection and disconnection, such as a vacuum circuit breaker, equipped with a fixed contact (14) and a moving contact (13). The circuit breaker (2) can be operated locally and/or remotely, manually by means of buttons (45, 46) or motorized (for example, by means of a closing and opening coil), and has the capacity to break electrical currents due to overloads and short circuits, as well as open nominal or load currents. In addition, this vacuum circuit breaker (2) has fast, manual or automatic reclosing capacity, for the elimination of transient faults, and can be programmed depending on the time and type of fault, and carried out from a control unit (43) of the installation. Likewise, the switching and protection device (1) comprises at least one first actuation means (3), such as a mechanical actuator, so that it activates the vacuum circuit breaker (2) to cause said switch (2) to pass from a closed status to an open status and vice versa.

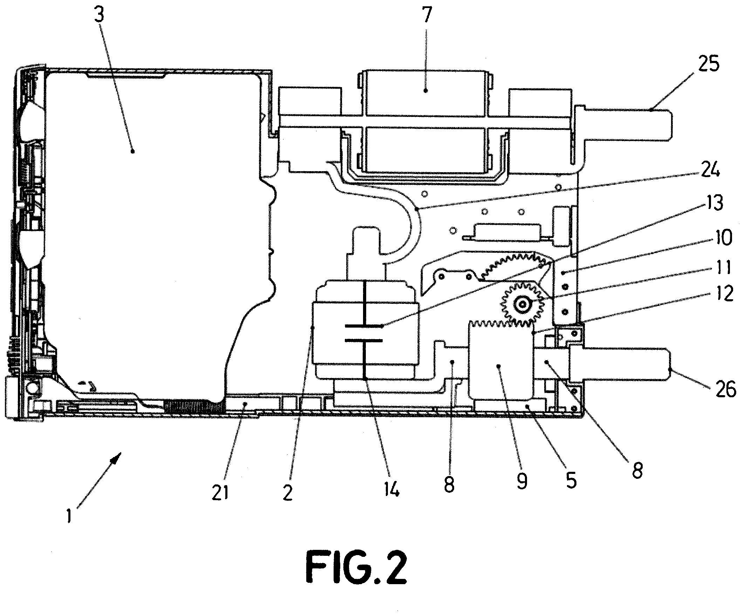

As shown in figures 1 to 4, the switching and protection device (1) also comprises at least one protection element (7), such as a fuse, against overloads and short-circuit currents and which is electrically connected in series with the vacuum circuit breaker (2). And as shown in said figures 1 to 4, it also comprises at least one disconnector (5) with at least two switching positions, with the capacity of isolating (open disconnector) or connecting (closed disconnector) the low voltage switchboard (6) of the side of the low-voltage grid (16) that is downstream the switching and protection device (1), this disconnector (5) being electrically connected in series with the vacuum circuit breaker (2) and the protection element (7). The fixed contact (14) of the vacuum circuit breaker (2) is electrically connected to the disconnector (5) and the moving contact (13) of the vacuum circuit breaker (2) is electrically connected to the protection element (7) by means of a flexible conductor (24), as shown in figure 2.

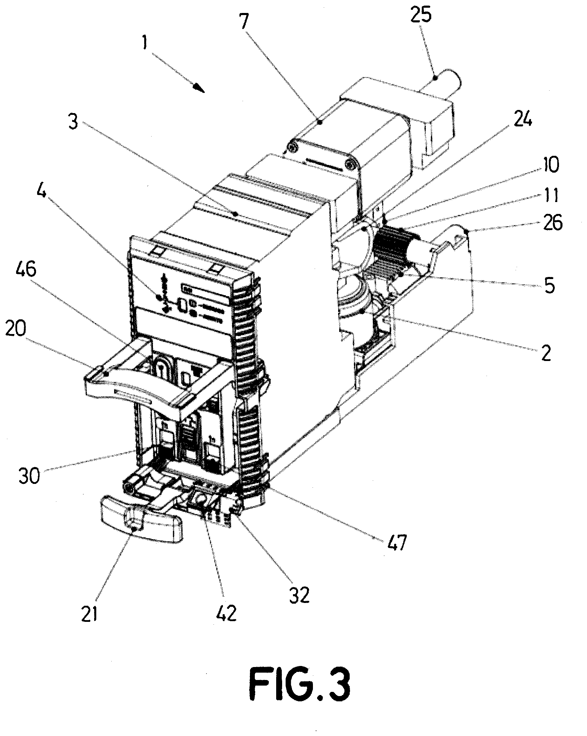

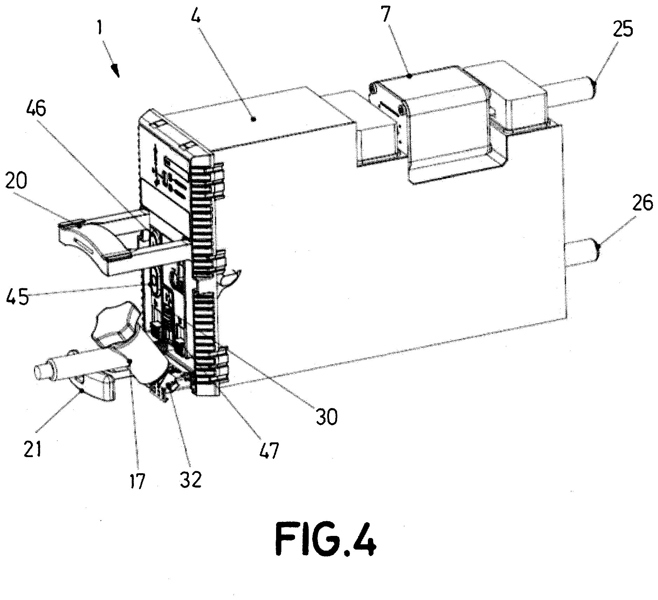

The disconnector (5) comprises linearly sliding contacts (8, 9), as can be seen in figure 2, the switching and protection device (1) comprising a second actuation means (10) that acts on the contacts (8 , 9) of the disconnector (5) to cause the passage of said disconnector (5) from a closed status to an open status and vice versa. The second actuation means (10) comprises a rack mechanism comprising at least one pinion (11) and a toothed bar (12), such that a rotation applied to the pinion (11) causes linear displacement of the toothed bar (12) and in turn the linear displacement of the moving contact (9) with respect to the fixed contact (8) of the disconnector (5). The actuation of the second actuation means (10) can be performed, for example, by means of an opening/closing lever (21), as can be seen in figure 3, manually or in a motorized way. The disconnector (5) can also include a grounding means (17), as shown in Figure 4, so that once the opening switching position of the disconnector (5) is obtained, the part of the low-voltage grid (16) that is downstream the switching and protection device (1), specifically the part of the low-voltage grid (16) that is downstream the disconnector (5), can be grounded against a possible voltage return from downstream towards the low voltage switchboard (6). In this sense, the disconnector (5) also includes a check point (42) to be able to safely verify the presence of voltage and to be able to connect the part of the low-voltage grid (16) connected downstream to protective grounding, such as for maintenance work under safe conditions.

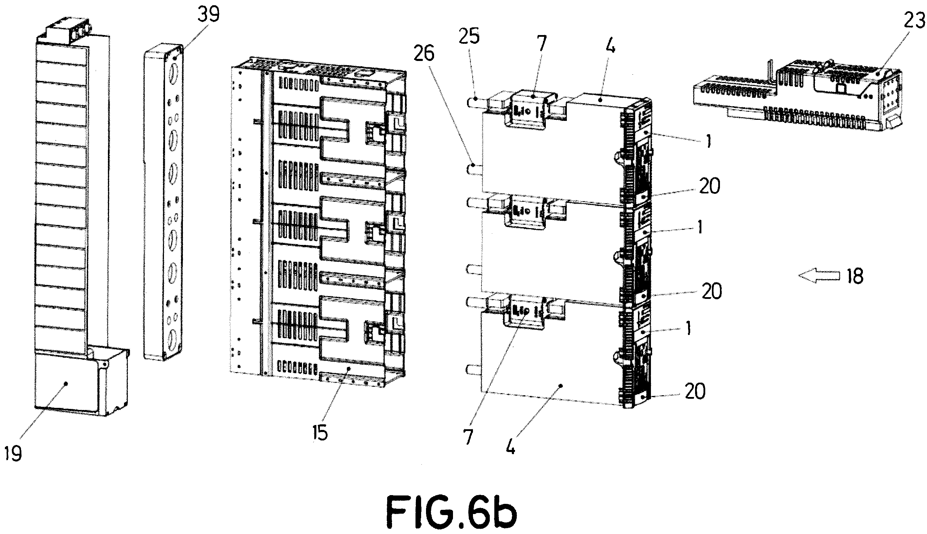

Figures 4 and 6b show how the switching and protection device (1) comprises a casing (4) that can incorporate inside the two-position vacuum circuit breaker (2), the first actuation means (3), the disconnector (5) and the second actuation means (10), leaving the protection element (7) mounted on the outside of the casing (4) in a hole provided for this purpose, so that the protection element (7) can be accessible from outside the casing (4) and easily replaceable, keeping the low voltage switchboard in operation at all times.

The casing (4) comprises at least one handle (20) for insertion or extraction (manual or automated) of the switching and protection device (1) in a three-pole enclosure (15), said three-pole enclosure (15) being able to comprise up to three switching and protection devices (1), one for each phase (37), as can be seen in figures 1, 6a, 6b and 8. In turn, this three-pole enclosure (15) is mounted on a support (19).

Figures 2 to 5 and Figures 6b and 8 show that the switching and protection device (1) comprises at least one input terminal (25) and one output terminal (26) at least partially incorporated in the casing (4), said terminals (25, 26) being electrically connected at one of their ends to a distribution busbar (27) of the low voltage switchboard (6) and with some bypass conductors (28) externally to the casing (4) , said terminals (25, 26) being electrically connected at the other end to the protection element (7) and the disconnector (5). The electrical connection between the input terminal (25) and the distribution busbar (27) and the electrical connection between the output terminal (26) and the bypass conductors (28) can be plug-in, screw-in or any other type.

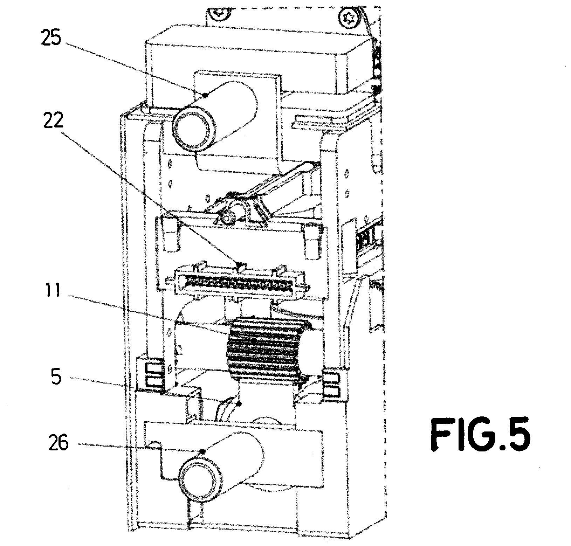

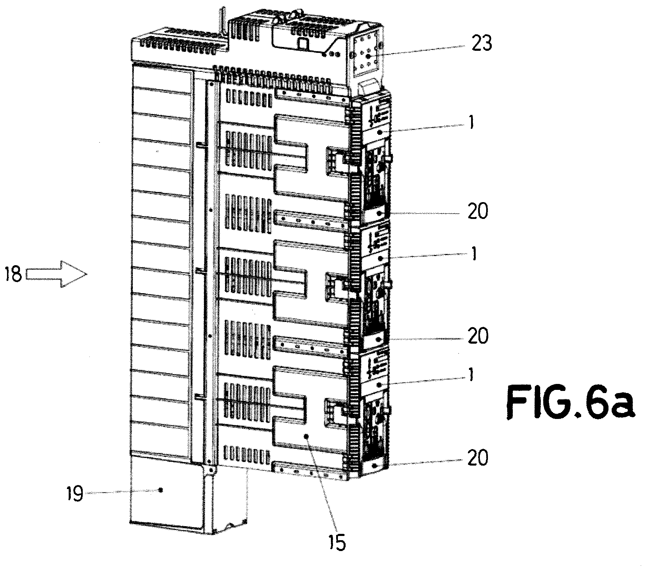

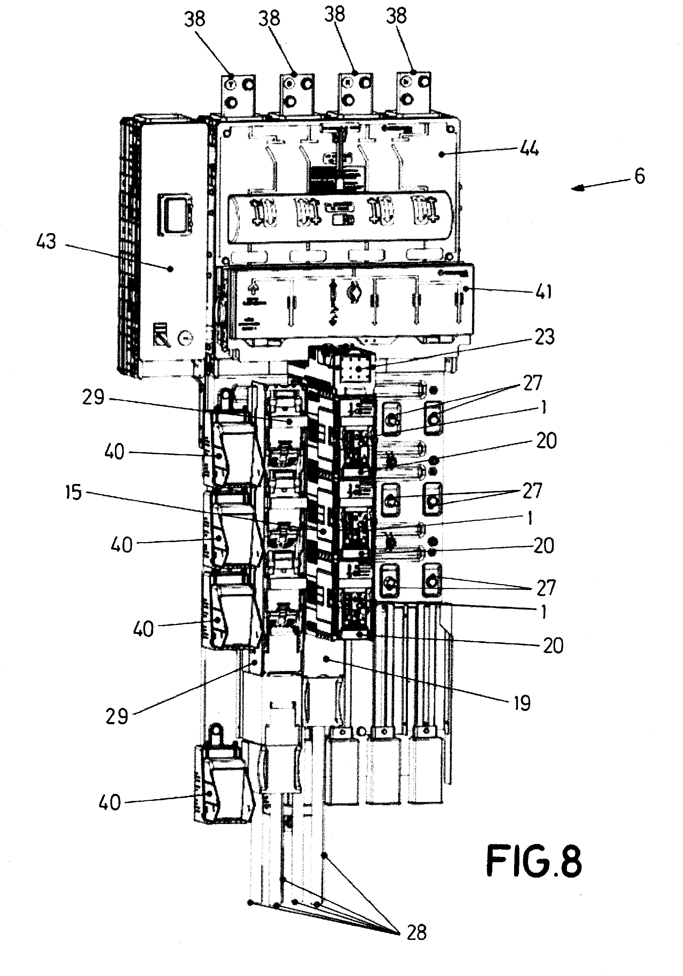

The switching and protection device (1) also comprises at least one interface (22), as shown in figure 5, which allows connecting the control, operation and status sensors of each of the elements of the switching and protection device (1) with an electronic protection relay (23) for supervision, control and protection functions, as shown in figure 1, with the protection relay (23) installed on the same automated three-pole base (18) where the switching and protection device (1) is installed, as shown in figures 6a, 6b and 8. The interface (22) could also be directly connected to a control unit (43) of the installation or of the low voltage switchboard (6) instead of being connected to the electronic protection relay (23).

Each protection relay (23) of each automated three-pole base (18) acquires different types of information for supervision purposes. All this information is transmitted by each protection relay (23) to the control unit (43), for example, as schematically shown in Figure 1, via Ethernet, in order to store the information or send it to a remote client management and/or protection system. This information is of great help to monitor and control the low-voltage grid. The protection relay (23) can also know the status of the different elements, such as the vacuum circuit breaker (2) and the disconnector (5), and even remotely send/receive open/close/reclose commands for each one of the phases (37) or for each switching and protection device (1) individually of each automated three-pole base (18). Likewise, the protection relay (23) includes the possibility of configuration and/or selection of standard or customized curves for protection against overloads and short circuits.

As shown in figures 6a and 6b, the automated three-pole base (18) is made up of the support (19), a measurement means (39), the three-pole enclosure (15) with the switching and protection devices (1) and the protection relay (23). In this way, as shown in figure 8, state-of-the-art three-pole fuse-holder bases (29) of a low-voltage switchboard (6) installed in the field and in operation can be replaced entirety or partially by automated three-pole bases (18) with switching and protection devices (1), with both protection systems being able to coexist on the same low-voltage switchboard (6) in operation, as shown in figure 8.

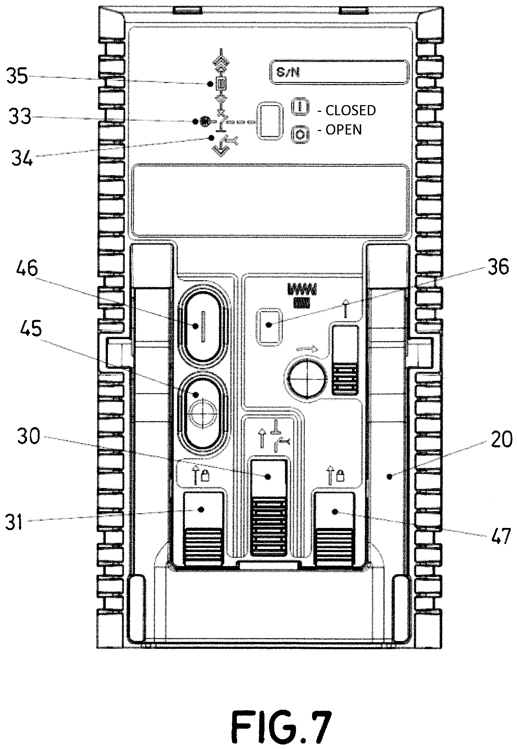

On the other hand, as shown in figures 4 and 7, the switching and protection device (1) comprises mechanical and electrical interlocks to guarantee the protection of operators when carrying out operations prior to maintenance, repair or substitution of elements in the low voltage switchboard or in order to avoid unwanted operations. The mechanical and electrical interlocks that the switching and protection device (1) includes are:
- a first interlock (30) that only allows the extraction of the switching and protection device (1) from the three-pole enclosure (15) when the vacuum circuit breaker (2) is in the opening switching position or that only allows the opening of the disconnector (5) when the circuit breaker (2) is in the opening switching position.
- a second interlock (31) to interlock, for example by padlocking, the manual operation by button (45, 46) of the vacuum circuit breaker (2).
- a third interlock (32) that allows disconnection or grounding of the switching and protection device (1) only when the disconnector (5) is in its opening switching position.
- a fourth interlock (47) to interlock, for example by padlocking, the manual spring load of the first actuation means (3) for the operation of the vacuum circuit breaker (2).

The switching and protection device (1) comprises several signals, as shown in figure 7, which allow viewing the status of the switching and protection device (1) itself, as well as the elements that it comprises, comprising the following indicator means:
- a first visual indicator means (33) of open or closed switching position of the vacuum circuit breaker (2).
- a second visual indicator means (34) of open or closed switching position of the disconnector (5).
- a third visual indicator means (35) of the status of the protection element (7).
- a fourth visual indicator means (36) of the status of the first actuation means (3), such as the indication of loaded springs of the mechanical actuator.

The automated three-pole base (18) with at least one switching and protection device (1) is applicable to low voltage switchboards (6). Figure 8 shows a low voltage switchboard (6) comprising at least one automated three-pole base (18) with at least one switching and protection device (1), wherein the low voltage switchboard (6) further comprises at least one set of connection bars (38), a distribution busbar (27), at least one measurement means (39), at least one auxiliary connection (40) and at least one auxiliary circuit output (41), as well as at least one support (19) on which the measurement means (39) is installed, a three-pole enclosure (15) equipped with at least one switching and protection device (1) and the electronic protection relay (23). In this way, the automated three-pole base (18) includes the support (19), the measuring means (39), the three-pole enclosure (15) with switching and protection devices (1) and the electronic protection relay (23). The support (19) comprises anchors for the mechanical fixing of the three-pole enclosure (15) equipped with at least one switching and protection device (1). The three-pole enclosure (15) includes a mechanical protection that prevents contact with live parts under voltage, such as the distribution busbar (27) or the bypass conductors (28) once the switching and protection device (1) has been removed from said three-pole enclosure (15), thus providing protection to people against access to dangerous parts and protection of the material against the harmful effects of mechanical impacts.

## Claims

1. Automated three-pole base (18) with switching and protection device (1), for a low voltage switchboard (6), wherein the device (1) comprises:
- a circuit breaker (2) with at least two switching positions, capable of cutting currents due to overloads and short circuits and nominal or load currents;
- a protection element (7) against overloads and short-circuit currents;
- a first actuation means (3) of the circuit breaker (2); and
- a casing (4) in which the circuit breaker (2) and the first actuation means (3) are incorporated inside
**characterized in that** the switching and protection device (1) further comprises a disconnector (5) with at least two switching positions, with the capacity of isolating or connecting the low voltage switchboard (6) from the part of the low-voltage grid (16) that is downstream the switching and protection device (1), wherein the disconnector (5) is electrically connected in series with the circuit breaker (2) and the protection element (7), said disconnector (5) being incorporated inside the casing (4) together with the circuit breaker (2) and the first actuation means (3).

2. Automated three-pole base (18) according to claim 1, **characterized in that** the disconnector (5) comprises linearly sliding contacts (8, 9).

3. Automated three-pole base (18) according to claim 1 or 2, **characterized in that** the switching and protection device (1) comprises a second actuation means (10) of the disconnector (5), said second actuation means (10) being incorporated inside the casing (4) together with the circuit breaker (2), the first actuation means (3) and the disconnector (5).

4. Automated three-pole base (18) according to claim 3, **characterized in that** the second actuation means (10) comprises a rack mechanism provided with at least one pinion (11) and a toothed bar (12), such that a rotation applied to the pinion (11) causes the linear displacement of the toothed bar (12) and in turn the linear displacement of the moving contact (9) of the disconnector (5).

5. Automated three-pole base (18) according to claim 3 or 4, **characterized in that** the second actuation means (10) comprises a lever (21) for opening/closing the disconnector (5).

6. Automated three-pole base (18) according to any of the preceding claims, **characterized in that** the disconnector (5) comprises a grounding means (17).

7. Automated three-pole base (18) according to claim 1, **characterized in that** the circuit breaker (2) is a vacuum circuit breaker, capable of fast automatic or manual reclosing, comprising a moving contact (13) and a fixed contact (14), wherein
- the fixed contact (14) of the vacuum circuit breaker (2) is electrically connected to the disconnector (5);
- the moving contact (13) of the vacuum circuit breaker (2) is electrically connected to the protection element (7 ) by means of a flexible conductor (24), and
- the moving contact (13) of the vacuum circuit breaker (2) is mechanically connected to the first actuation means (3).

8. Automated three-pole base (18) according to claim 1, **characterized in that** the switching and protection device (1) comprises, at least partially incorporated in the casing (4), at least one input terminal (25) with one end for connection to a distribution busbar (27) and the other for connection to the protection element (7) and at least one output terminal (26) with one end for connection to some bypass conductors (28) and the other for connection to the disconnector (5).

9. Automated three-pole base (18) according to claim 1, **characterized in that** the casing (4) comprises at least one handle (20) for inserting the device (1) into a three-pole enclosure (15) or for extracting the device (1) from a three-pole enclosure (15), and wherein the three-pole enclosure (15) comprises a switching and protection device (1) for each phase (37).

10. Automated three-pole base (18) according to claim 6, **characterized in that** the disconnector (5) includes a check point (42) for the presence of voltage.

11. Automated three-pole base (18) according to any of the preceding claims, **characterized in that** the switching and protection device (1) comprises a first interlock (30) that only allows the extraction of the switching and protection device (1) from the three-pole enclosure (15) when the circuit breaker (2) is in the opening switching position or that only allows the opening of the disconnector (5) when the circuit breaker (2) is in the opening switching position.

12. Automated three-pole base (18) according to any of the preceding claims, **characterized in that** the switching and protection device (1) includes a second interlock (31) to interlock the manual switching by button (45, 46) of the circuit breaker (2).

13. Automated three-pole base (18) according to any of the preceding claims, **characterized in that** the switching and protection device (1) comprises a third interlock (32) that allows the switching and protection device (1) to be grounded only when the disconnector (5) is in its opening switching position.

14. Automated three-pole base (18) according to any of the preceding claims, **characterized in that** the switching and protection device (1) comprises a fourth interlock (47) to interlock the manual spring loading of the first actuation means (3) for the operation of the circuit breaker (2).

15. Automated three-pole base (18) according to any of the preceding claims, **characterized in that** the switching and protection device (1) comprises an interface (22) to connect control, operation and status sensors of each of the elements of the device (1) with a protection relay (23) for supervision, control and protection functions.

16. Automated three-pole base (18) according to any of the preceding claims, **characterized in that** the switching and protection device (1) comprises:
- a first visual indicator means (33) for the open or closed switching position of the circuit breaker (2);
- a second visual indicator means (34) for the open or closed switching position of the disconnector (5);
- a third visual indicator means (35) of the status of the protection element (7); and
- a fourth visual indicator means (36) of the status of the first actuation means (3).

17. Low voltage switchboard comprising at least one automated three-pole base (18) as described in any of the preceding claims, which also comprises at least one set of connection bars (38), a distribution busbar (27), at least one measurement means (39), at least one auxiliary connection (40), at least one auxiliary circuit output (41) and at least one disconnection base (44), **characterized in that** it also comprises at least one support (19) on which the measurement means (39), a three-pole enclosure (15) equipped with at least one switching and protection device (1) and the protection relay (23) are installed, so that the assembly formed by the support (19), the measurement means (39), the three-pole enclosure (15) with switching and protection devices (1) and the protection relay (23) constitutes an automated three-pole base (18).

## Patentansprüche

1. Automatisierte dreipolige Basis (18) mit Schalt- und Schutzvorrichtung (1) für ein Niederspannungsschaltfeld (6), wobei die Vorrichtung (1) Folgendes umfasst:
• einen Schutzschalter (2) mit mindestens zwei Schaltstellungen, der Ströme aufgrund von Überlastungen und Kurzschlüssen sowie Nenn- oder Lastströme unterbrechen kann;
• ein Schutzelement (7) gegen Überlastungen und Kurzschlussströme;
• ein erstes Betätigungsmittel (3) des Schutzschalters (2); und
• ein Gehäuse (4), in das der Schutzschalter (2) und das erste Betätigungsmittel (3) integriert sind
**dadurch gekennzeichnet, dass** die Schalt- und Schutzvorrichtung (1) ferner einen Trennschalter (5) mit mindestens zwei Schaltstellungen umfasst, mit der Fähigkeit, das Niederspannungsschaltfeld (6) von dem Teil des Niederspannungsnetzes (16) zu trennen oder mit diesem zu verbinden, der stromabwärts der Schalt- und Schutzvorrichtung (1) liegt, wobei der Trennschalter (5) elektrisch in Reihe mit dem Schutzschalter (2) und dem Schutzelement (7) geschaltet ist, wobei der Trennschalter (5) zusammen mit dem Schutzschalter (2) und dem ersten Betätigungsmittel (3) in das Gehäuse (4) integriert ist.

2. Automatisierte dreipolige Basis (18) gemäß Anspruch 1, **dadurch gekennzeichnet, dass** der Trennschalter (5) linear verschiebbare Kontakte (8, 9) umfasst.

3. Automatisierte dreipolige Basis (18) gemäß Anspruch 1 oder 2, **dadurch gekennzeichnet, dass** die Schalt- und Schutzvorrichtung (1) ein zweites Betätigungsmittel (10) des Trennschalters (5) umfasst, wobei das zweite Betätigungsmittel (10) zusammen mit dem Schutzschalter (2), dem ersten Betätigungsmittel (3) und dem Trennschalter (5) in das Gehäuse (4) integriert ist.

4. Automatisierte dreipolige Basis (18) gemäß Anspruch 3, **dadurch gekennzeichnet, dass** das zweite Betätigungsmittel (10) einen Zahnstangenmechanismus umfasst, der mit mindestens einem Ritzel (11) und einer Zahnstange (12) versehen ist, so dass eine auf das Ritzel (11) ausgeübte Drehung die lineare Verschiebung der Zahnstange (12) und wiederum die lineare Verschiebung des beweglichen Kontakts (9) des Trennschalters (5) bewirkt.

5. Automatisierte dreipolige Basis (18) gemäß Anspruch 3 oder 4, **dadurch gekennzeichnet, dass** das zweite Betätigungsmittel (10) einen Hebel (21) zum Öffnen/Schließen des Trennschalters (5) umfasst.

6. Automatisierte dreipolige Basis (18) gemäß einem der vorstehenden Ansprüche, **dadurch gekennzeichnet, dass** der Trennschalter (5) ein Erdungsmittel (17) umfasst.

7. Automatisierte dreipolige Basis (18) gemäß Anspruch 1, **dadurch gekennzeichnet, dass** der Schutzschalter (2) ein Vakuum-Schutzschalter ist, der eine schnelle automatische oder manuelle Wiedereinschaltung ermöglicht und einen beweglichen Kontakt (13) und einen festen Kontakt (14) umfasst, wobei
• der feste Kontakt (14) des Vakuum-Schutzschalters (2) elektrisch mit dem Trennschalter (5) verbunden ist;
• der bewegliche Kontakt (13) des Vakuum-Schutzschalters (2) elektrisch mit dem Schutzelement (7) über einen flexiblen Leiter (24) verbunden ist und
• der bewegliche Kontakt (13) des Vakuum-Schutzschalters (2) mechanisch mit dem ersten Betätigungsmittel (3) verbunden ist.

8. Automatisierte dreipolige Basis (18) gemäß Anspruch 1, **dadurch gekennzeichnet, dass** die Schalt- und Schutzvorrichtung (1) zumindest teilweise in das Gehäuse (4) integriert, zumindest eine Eingangsklemme (25) mit einem Ende zum Anschluss an eine Verteilerschiene (27) und dem anderen Ende zum Anschluss an das Schutzelement (7) und zumindest eine Ausgangsklemme (26) mit einem Ende zum Anschluss an einige Bypass-Leiter (28) und dem anderen Ende zum Anschluss an den Trennschalter (5) umfasst.

9. Automatisierte dreipolige Basis (18) nach Anspruch 1, **dadurch gekennzeichnet, dass** das Gehäuse (4) mindestens einen Griff (20) zum Einsetzen der Vorrichtung (1) in eine dreipolige Einfassung (15) oder zum Herausnehmen der Vorrichtung (1) aus einer dreipoligen Einfassung (15) umfasst, und wobei die dreipolige Einfassung (15) für jede Phase (37) eine Schalt- und Schutzvorrichtung (1) umfasst.

10. Automatische dreipolige Basis (18) gemäß Anspruch 6, **dadurch gekennzeichnet, dass** der Trennschalter (5) einen Prüfpunkt (42) für das Vorhandensein von Spannung umfasst.

11. Automatisierte dreipolige Basis (18) gemäß einem der vorstehenden Ansprüche, **dadurch gekennzeichnet, dass** die Schalt- und Schutzvorrichtung (1) eine erste Verriegelung (30) umfasst, die das Herausziehen der Schalt- und Schutzvorrichtung (1) aus der dreipoligen Einfassung (15) nur dann zulässt, wenn sich der Schutzschalter (2) in der geöffneten Schaltstellung befindet, oder die das Öffnen des Trennschalters (5) nur dann zulässt, wenn sich der Schutzschalter (2) in der geöffneten Schaltstellung befindet.

12. Automatisierte dreipolige Basis (18) gemäß einem der vorstehenden Ansprüche, **dadurch gekennzeichnet, dass** die Schalt- und Schutzvorrichtung (1) eine zweite Verriegelung (31) umfasst, um die manuelle Schaltung durch den Knopf (45, 46) des Schutzschalters (2) zu verriegeln.

13. Automatisierte dreipolige Basis (18) gemäß einem der vorstehenden Ansprüche, **dadurch gekennzeichnet, dass** die Schalt- und Schutzvorrichtung (1) eine dritte Verriegelung (32) umfasst, die es ermöglicht, die Schalt- und Schutzvorrichtung (1) nur dann zu erden, wenn sich der Trennschalter (5) in seiner geöffneten Schaltstellung befindet.

14. Automatisierte dreipolige Basis (18) gemäß einem der vorstehenden Ansprüche, **dadurch gekennzeichnet, dass** die Schalt- und Schutzvorrichtung (1) eine vierte Verriegelung (47) umfasst, um die manuelle Federbelastung des ersten Betätigungsmittels (3) für den Betrieb des Schutzschalters (2) zu verriegeln.

15. Automatisierte dreipolige Basis (18) gemäß einem der vorstehenden Ansprüche, **dadurch gekennzeichnet, dass** die Schalt- und Schutzvorrichtung (1) eine Schnittstelle (22) umfasst, um Steuer-, Betriebs- und Statussensoren jedes der Elemente der Vorrichtung (1) mit einem Schutzrelais (23) für Überwachungs-, Steuerungs- und Schutzfunktionen zu verbinden.

16. Automatisierte dreipolige Basis (18) gemäß einem der vorstehenden Ansprüche, **dadurch gekennzeichnet, dass** die Schalt- und Schutzvorrichtung (1) Folgendes umfasst:
• ein erstes visuelles Anzeigemittel (33) für die offene oder geschlossene Schaltstellung des Schutzschalters (2);
• ein zweites visuelles Anzeigemittel (34) für die offene oder geschlossene Schaltstellung des Trennschalters (5);
• ein drittes visuelles Anzeigemittel (35) für den Status des Schutzelements (7); und
• ein viertes visuelles Anzeigemittel (36) für den Status des ersten Betätigungsmittels (3).

17. Niederspannungsschaltfeld mit mindestens einer automatisierten dreipoligen Basis (18) gemäß einem der vorhergehenden Ansprüche, der außerdem mindestens einen Satz von Verbindungsschienen (38), eine Verteilerschiene (27), mindestens ein Messmittel (39), mindestens einen Hilfsanschluss (40), mindestens einen Hilfsstromkreisausgang (41) und mindestens eine Trennbasis (44) umfasst, **dadurch gekennzeichnet, dass** sie außerdem mindestens einen Träger (19) umfasst, auf dem das Messmittel (39), eine dreipolige Einfassung (15), die mit mindestens einer Schalt- und Schutzvorrichtung (1) ausgestattet ist, und das Schutzrelais (23) installiert sind, so dass die durch den Träger (19), den Messmitteln (39), der dreipoligen Einfassung (15) mit Schalt- und Schutzvorrichtungen (1) und den Schutzrelais (23) gebildete Anordnung eine automatische dreipolige Basis (18) darstellt.

## Revendications

1. Base tripolaire automatisée (18) avec dispositif de commutation et de protection (1), pour un tableau de distribution basse tension (6), dans laquelle le dispositif (1) comprend :
- un disjoncteur (2) avec au moins deux positions de commutation, permettant la coupure de courants dus à des surcharges et des courts-circuits et de courants nominaux ou de charge ;
- un élément de protection (7) contre des surcharges et des courants de court-circuit ;
- un premier moyen d'actionnement (3) du disjoncteur (2) ; et
- un boîtier (4) à l'intérieur duquel le disjoncteur (2) et le premier moyen d'actionnement (3) sont incorporés
**caractérisée en ce que** le dispositif de commutation et de protection (1) comprend en outre un sectionneur (5) avec au moins deux positions de commutation, avec la capacité d'isoler ou de connecter le tableau de distribution basse tension (6) de la partie du réseau basse tension (16) qui est en aval du dispositif de commutation et de protection (1), dans laquelle le sectionneur (5) est électriquement connecté en série au disjoncteur (2) et à l'élément de protection (7), ledit sectionneur (5) étant incorporé à l'intérieur du boîtier (4) conjointement avec le disjoncteur (2) et le premier moyen d'actionnement (3).

2. Base tripolaire automatisée (18) selon la revendication 1, **caractérisée en ce que** le sectionneur (5) comprend des contacts glissants linéaires (8, 9).

3. Base tripolaire automatisée (18) selon la revendication 1 ou 2, **caractérisée en ce que** le dispositif de commutation et de protection (1) comprend un deuxième moyen d'actionnement (10) du sectionneur (5), ledit deuxième moyen d'actionnement (10) étant incorporé à l'intérieur du boîtier (4) conjointement avec le disjoncteur (2), le premier moyen d'actionnement (3) et le sectionneur (5).

4. Base tripolaire automatisée (18) selon la revendication 3, **caractérisée en ce que** le deuxième moyen d'actionnement (10) comprend un mécanisme à crémaillère doté d'au moins un pignon (11) et d'une barre dentée (12), de sorte qu'une rotation appliquée au pignon (11) provoque le déplacement linéaire de la barre dentée (12) et à son tour le déplacement linéaire du contact mobile (9) du sectionneur (5).

5. Base tripolaire automatisée (18) selon la revendication 3 ou 4, **caractérisée en ce que** le deuxième moyen d'actionnement (10) comprend un levier (21) d'ouverture/fermeture du sectionneur (5).

6. Base tripolaire automatisée (18) selon l'une quelconque des revendications précédentes, **caractérisée en ce que** le sectionneur (5) comprend un moyen de mise à la terre (17).

7. Base tripolaire automatisée (18) selon la revendication 1, **caractérisée en ce que** le disjoncteur (2) est un disjoncteur à vide, permettant une refermeture automatique ou manuelle rapide, comprenant un contact mobile (13) et un contact fixe (14), dans laquelle
- le contact fixe (14) du disjoncteur à vide (2) est électriquement connecté au sectionneur (5) ;
- le contact mobile (13) du disjoncteur à vide (2) est électriquement connecté à l'élément de protection (7) au moyen d'un conducteur souple (24), et
- le contact mobile (13) du disjoncteur à vide (2) est relié mécaniquement au premier moyen d'actionnement (3).

8. Base tripolaire automatisée (18) selon la revendication 1, **caractérisée en ce que** le dispositif de commutation et de protection (1) comprend, au moins partiellement incorporé dans le boîtier (4), au moins une borne d'entrée (25) avec une extrémité pour la connexion à une barre omnibus de distribution (27) et l'autre pour la connexion à l'élément de protection (7) et au moins une borne de sortie (26) avec une extrémité pour la connexion à certains conducteurs de dérivation (28) et l'autre pour la connexion au sectionneur (5).

9. Base tripolaire automatisée (18) selon la revendication 1, **caractérisée en ce que** le boîtier (4) comprend au moins une poignée (20) pour insérer le dispositif (1) dans un coffret tripolaire (15) ou pour extraire le dispositif (1) d'un coffret tripolaire (15), et dans laquelle le coffret tripolaire (15) comprend un dispositif de commutation et de protection (1) pour chaque phase (37).

10. Base tripolaire automatisée (18) selon la revendication 6, **caractérisée en ce que** le sectionneur (5) comporte un point de contrôle (42) de la présence de tension.

11. Base tripolaire automatisée (18) selon l'une quelconque des revendications précédentes, **caractérisée en ce que** le dispositif de commutation et de protection (1) comprend un premier verrouillage (30) qui ne permet l'extraction du dispositif de commutation et de protection (1) du coffret tripolaire (15) que lorsque le disjoncteur (2) est en position de commutation d'ouverture ou qui ne permet l'ouverture du sectionneur (5) que lorsque le disjoncteur (2) est en position de commutation d'ouverture.

12. Base tripolaire automatisée (18) selon l'une quelconque des revendications précédentes, **caractérisée en ce que** le dispositif de commutation et de protection (1) comporte un deuxième verrouillage (31) pour verrouiller la commutation manuelle par bouton (45, 46) du disjoncteur (2).

13. Base tripolaire automatisée (18) selon l'une quelconque des revendications précédentes, **caractérisée en ce que** le dispositif de commutation et de protection (1) comprend un troisième verrouillage (32) qui ne permet la mise à la terre du dispositif de commutation et de protection (1) que lorsque le sectionneur (5) est dans sa position de commutation d'ouverture.

14. Base tripolaire automatisée (18) selon l'une quelconque des revendications précédentes, **caractérisée en ce que** le dispositif de commutation et de protection (1) comprend un quatrième verrouillage (47) pour verrouiller le chargement manuel par ressort du premier moyen d'actionnement (3) pour le fonctionnement du disjoncteur (2).

15. Base tripolaire automatisée (18) selon l'une quelconque des revendications précédentes, **caractérisée en ce que** le dispositif de commutation et de protection (1) comprend une interface (22) pour connecter des capteurs de commande, de fonctionnement et d'état de chacun des éléments du dispositif (1) à un relais de protection (23) pour des fonctions de surveillance, de commande et de protection.

16. Base tripolaire automatisée (18) selon l'une quelconque des revendications précédentes, **caractérisée en ce que** le dispositif de commutation et de protection (1) comprend :
- un premier moyen d'indication visuelle (33) pour la position de commutation ouverte ou fermée du disjoncteur (2) ;
- un deuxième moyen d'indication visuelle (34) pour la position de commutation ouverte ou fermée du sectionneur (5) ;
- un troisième moyen d'indication visuelle (35) de l'état de l'élément de protection (7) ; et
- un quatrième moyen d'indication visuelle (36) de l'état du premier moyen d'actionnement (3).

17. Tableau de distribution basse tension comprenant au moins une base tripolaire automatisée (18) selon l'une quelconque des revendications précédentes, qui comprend également au moins un jeu de barres de connexion (38), une barre omnibus de distribution (27), au moins un moyen de mesure (39), au moins une connexion auxiliaire (40), au moins une sortie de circuit auxiliaire (41) et au moins une base de déconnexion (44), **caractérisé en ce qu'**il comprend également au moins un support (19) sur lequel le moyen de mesure (39), un coffret tripolaire (15) équipé d'au moins un dispositif de commutation et de protection (1) et le relais de protection (23) sont installés, de sorte que l'ensemble formé par le support (19), le moyen de mesure (39), le coffret tripolaire (15) avec des dispositifs de commutation et de protection (1) et le relais de protection (23) constitue une base tripolaire automatisée (18).
